# EUROPEAN PATENT SPECIFICATION

(11) **EP 4 280 538 B1**
(45) Date of publication and mention of the grant of the patent: **07.01.2026**
(21) Application number: 21925468.7
(22) Date of filing: 25.11.2021
(51) Int. Cl.: H04L 9/32

(54) **SERVICE CERTIFICATE MANAGEMENT METHOD AND APPARATUS, SYSTEM, AND ELECTRONIC DEVICE**
VERFAHREN UND VORRICHTUNG ZUR VERWALTUNG VON DIENSTZERTIFIKATEN, SYSTEM UND ELEKTRONISCHE VORRICHTUNG
PROCÉDÉ ET APPAREIL DE GESTION DE CERTIFICAT DE SERVICE, SYSTÈME, ET DISPOSITIF ÉLECTRONIQUE

(30) Priority: 10.02.2021 CN 202110184089
(43) Date of publication of application: 22.11.2023
(73) Proprietor: Huawei Technologies Co., Ltd., Shenzhen, Guangdong 518129 (CN)
(72) Inventor: WU, Tiejun, Shenzhen, Guangdong 518129 (CN); LIU, Haixing, Shenzhen, Guangdong 518129 (CN); XIONG, Zhenhua, Shenzhen, Guangdong 518129 (CN)
(74) Representative: Thun, Clemens
(86) International application number: PCT/CN2021/133054
(87) International publication number: WO 2022/170821

(56) References cited:
- WO-A1-2016/148903
- CN-A- 103 533 403
- CN-A- 110 445 614
- CN-A- 111 066 284
- CN-A- 111 917 685
- US-A1- 2007 150 737
- US-B2- 10 320 570

## Description

### TECHNICAL FIELD

This application relates to the field of information security technologies, and in particular, to a method, an apparatus, and a system for service certificate management, and an electronic device.

### BACKGROUND

The Internet of Things (IoT) is an information bearer that is based on the Internet and a conventional telecom network, and enables all IoT devices to form a network that interconnects with each other. Generally, the IoT devices may establish a connection to an external network through a home network or another device that can access the Internet, to perform a service.

Currently, as network security issues are increasingly valued by people, more and more services are forced to use a security protocol. Therefore, an IoT device needs to use a secure communication protocol to access a network. Currently, a digital certificate (such as a service certificate) is a general solution for ensuring that a security protocol is used. The digital certificate may be preset before delivery. However, if a vendor is not concerned about security, the vendor may not use the security protocol but directly use plaintext transmission or a private solution, which brings a great security risk. In addition, the vendor can preset a unified service certificate casually, and all devices and services use a same service certificate, which also brings a great security risk. Once a service of a device is attacked, resulting in a service certificate vulnerability, all services of the entire network are affected. However, if a vendor is concerned about security, the vendor may preset a service certificate unique to each device. However, this increases device production complexity and increases device production costs.

Therefore, how to ensure service security of the IoT device without presetting a service certificate is a technical problem that needs to be urgently resolved at present.

Further, WO 2016/148903 A1 refers to a method operational at a user device that includes receiving, from an application service provider, an application-specific certificate associated with at least one application service provided by the application service provider. The method also includes determining that a wireless communication network provides application-specific access to the application service provided by the application service provider, and transmitting a registration request including the application-specific certificate to the wireless communication network for authentication of the user device. The application-specific certificate includes a user device public key. The method further includes performing authentication and key agreement with the wireless communication network, and communicating with the application service after authentication and key agreement is successfully performed.

### SUMMARY

The objects of the present invention are achieved by means of the appended set of claims. Embodiments of this application provide a method, an apparatus, and a system for service certificate management, and an electronic device. A device certificate authenticated by a server is preset in a network management device, so that the network management device may issue a service certificate to a lower-layer device of the network management device by using the device certificate, thereby forming a secure and effective certificate chain between the server, the network management device, and the lower-layer device of the network management device, avoiding presetting a service certificate in the lower-layer device of the network management device, and ensuring service security of the lower-layer device of the network management device. This problem is solved by the subject matter of the independent claims. Further implementation forms are provided in the dependent claims.

According to a first aspect, an embodiment of this application provides a method for service certificate management, applied to a network management device, where a first device certificate authenticated by a server is preset in the network management device, and the method includes: receiving a first message sent by a first user equipment, where the first message includes a service identifier of a first service and is for requesting to allocate a service certificate; signing, in response to the first message, the service identifier by using a key of the first device certificate to generate a first service certificate, where the first service certificate is verified by the server when the first user equipment accesses a network; and sending the first service certificate to the first user equipment.

Therefore, a device certificate authenticated by a server is preset in a network management device, so that the network management device may issue a service certificate to a lower-layer device of the network management device by using the device certificate, thereby forming a secure and effective certificate chain between the server, the network management device, and the lower-layer device of the network management device, avoiding presetting a service certificate in the lower-layer device of the network management device, and ensuring service security of the lower-layer device of the network management device.

In a possible implementation, the method further includes: sending first certificate information of the first service certificate to a second user equipment, where the first certificate information includes at least one of a sequence number, a validity period, and an identifier of the first user equipment, the first certificate information is for verifying an identity of the first user equipment when the second user equipment communicates with the first user equipment, and the second user equipment is a lower-layer device of the network management device. In this way, when lower-layer devices of the network management device communicate with each other, one of the lower-layer devices may check the other, thereby improving security of communication between lower-layer devices.

In a possible implementation, the first message includes a vendor identifier of a vendor to which the first user equipment belongs; and before the signing the service identifier by using a key of the first device certificate, the method further includes: verifying, based on the vendor identifier, the vendor to which the first user equipment belongs, and determining that the vendor to which the first user equipment belongs is a trusted vendor. Therefore, the network management device issues the service certificate to the user equipment when the vendor to which the user equipment belongs is a trusted vendor, thereby further improving security of issuing the service certificate.

In a possible implementation, the first message includes a second device certificate of the first user equipment; and before the signing the service identifier by using a key of the first device certificate, the method further includes: verifying, based on the second device certificate, whether the first user equipment belongs to a preset vendor, and determining that the first user equipment belongs to the preset vendor. Therefore, the network management device issues the service certificate to the user equipment when the user equipment belongs to the preset vendor, thereby further improving security of issuing the service certificate.

In a possible implementation, before the signing the service identifier by using a key of the first device certificate, the method further includes: determining that the network management device has a certificate issuance permission. In this way, it is ensured that the network management device can issue the service certificate, thereby ensuring that the service certificate can be successfully issued.

In a possible implementation, the method further includes: determining, when the first service certificate is generated, the validity period of the first service certificate. In this way, the service certificate is prevented from being permanently valid, and security is improved.

In a possible implementation, the method further includes: recording first device information of the first user equipment, where the first device information includes one or more of the following: a device identifier of the first user equipment, the vendor identifier of the vendor to which the first user equipment belongs, a physical address of the first user equipment, or a product sequence number of the first user equipment. In this way, the system or the user can further determine the information about the user equipment, to avoid a case in which the user equipment forges a device of another trusted vendor, thereby further improving security of issuing the service certificate.

In a possible implementation, the method further includes: determining that the first service certificate is revoked; and restarting at least one of the first user equipment and the first service. Therefore, it is ensured that the user equipment cannot continue to perform the first service.

In a possible implementation, the method further includes: sending the first service certificate to the server. In this way, the server may learn corresponding service certificate information, and further manage the corresponding service certificate.

According to a second aspect, an embodiment of this application provides a method for service certificate management, applied to a first user equipment, where the method includes: sending a first message to a network management device, where the first message includes a service identifier of a first service and is for requesting to allocate a service certificate, and a first device certificate authenticated by a server is preset in the network management device; and receiving a first service certificate sent by the network management device, where the first service certificate is generated by the network management device by signing the service identifier by using a key of the first device certificate, and the first service certificate is verified by the server when the first user equipment accesses a network.

According to a third aspect, an embodiment of this application provides an apparatus for service certificate management, deployed in a network management device, where a first device certificate authenticated by a server is preset in the network management device, and the apparatus includes: a communication module, configured to receive a first message sent by a first user equipment, where the first message includes a service identifier of a first service and is for requesting to allocate a service certificate; and a processing module, configured to sign, in response to the first message, the service identifier by using a key of the first device certificate to generate a first service certificate, where the first service certificate is verified by the server when the first user equipment accesses a network, where the communication module is further configured to send the first service certificate to the first user equipment.

In a possible implementation, the communication module is further configured to send first certificate information of the first service certificate to a second user equipment, where the first certificate information includes at least one of a sequence number, a validity period, and an identifier of the first user equipment, the first certificate information is for verifying an identity of the first user equipment when the second user equipment communicates with the first user equipment, and the second user equipment is a lower-layer device of the network management device.

In a possible implementation, the first message includes a vendor identifier of a vendor to which the first user equipment belongs; and the processing module is further configured to: before signing the service identifier by using the key of the first device certificate, verify, based on the vendor identifier, the vendor to which the first user equipment belongs, and determine that the vendor to which the first user equipment belongs is a trusted vendor.

In a possible implementation, the first message includes a second device certificate of the first user equipment; and the processing module is further configured to: before signing the service identifier by using the key of the first device certificate, verify, based on the second device certificate, whether the first user equipment belongs to a preset vendor, and determine that the first user equipment belongs to the preset vendor.

In a possible implementation, the processing module is further configured to: before signing the service identifier by using the key of the first device certificate, determine that the network management device has a certificate issuance permission.

In a possible implementation, the processing module is further configured to determine, when the first service certificate is generated, the validity period of the first service certificate.

In a possible implementation, the processing module is further configured to record first device information of the first user equipment, where the first device information includes one or more of the following: a device identifier of the first user equipment, the vendor identifier of the vendor to which the first user equipment belongs, a physical address of the first user equipment, or a product sequence number of the first user equipment.

In a possible implementation, the processing module is further configured to determine that the first service certificate is revoked and restart at least one of the first user equipment and the first service.

In a possible implementation, the communication module is further configured to send the first service certificate to a server.

According to a fourth aspect, an embodiment of this application provides an apparatus for service certificate management, deployed in a first user equipment, and the apparatus includes: a communication module, configured to send a first message to a network management device, where the first message includes a service identifier of a first service and is for requesting to allocate a service certificate, and a first device certificate authenticated by a server is preset in the network management device; and the communication module is further configured to receive a first service certificate sent by the network management device, where the first service certificate is generated by the network management device by signing the service identifier by using a key of the first device certificate, and the first service certificate is verified by the server when the first user equipment accesses a network.

According to a fifth aspect, an embodiment of this application provides a system for service certificate management, where the system includes: a network management device, configured to perform the method provided in the first aspect; a first user equipment, configured to perform the method provided in the second aspect; and a server, configured to pre-authenticate a first device certificate of the network management device, and verify a first service certificate received from the first user equipment when the first user equipment accesses a network.

According to a sixth aspect, an embodiment of this application provides an electronic device, including: at least one memory, configured to store a program; and at least one processor, configured to invoke the program stored in the memory, to perform the method provided in the first aspect or perform the method provided in the second aspect. For example, the electronic device may be a network management device, or may be a user equipment.

According to a seventh aspect, an embodiment of this application provides a computer storage medium. The computer storage medium stores instructions, and when the instructions run on a computer, the computer is enabled to perform the method provided in the first aspect or the method provided in the second aspect.

According to an eighth aspect, an embodiment of this application provides a computer program product including instructions. When the instructions run on a computer, the computer is enabled to perform the method provided in the first aspect, or perform the method provided in the second aspect.

According to a ninth aspect, an embodiment of this application provides a chip, including at least one processor and an interface, where the at least one processor obtains program instructions or data by using the interface, and the at least one processor is configured to execute the program instructions, to implement the method provided in the first aspect or perform the method provided in the second aspect. In an example, a key of each certificate (for example, a root certificate or a device certificate) may be stored in the chip.

### BRIEF DESCRIPTION OF DRAWINGS

FIG 1 is a schematic diagram of a system architecture of a system for service certificate management according to an embodiment of this application;
FIG 2 is a schematic diagram of a process in which a server authenticates a network management device according to an embodiment of this application;
FIG 3 is a schematic diagram of a display interface of a user equipment according to an embodiment of this application;
FIG 4 is a schematic diagram of a structure of a server according to an embodiment of this application;
FIG 5 is a schematic diagram of a structure of a network management device according to an embodiment of this application;
FIG 6 is a schematic diagram of a structure of a user equipment according to an embodiment of this application;
FIG 7 is a schematic communication diagram of a method for service certificate management according to an embodiment of this application;
FIG 8 is a schematic diagram of a process of service certificate management according to an embodiment of this application;
FIG 9 is a schematic diagram of a structure of an apparatus for service certificate management according to an embodiment of this application; and
FIG 10 is a schematic diagram of a structure of a chip according to an embodiment of this application.

### DESCRIPTION OF EMBODIMENTS

To make the objectives, technical solutions, and advantages of embodiments of this application clearer, the following describes the technical solutions of embodiments of this application with reference to the accompanying drawings.

Because the solutions involve a technology related to a digital certificate, for ease of understanding, the following first describes related terms and related concepts in the solutions.

### (1) Digital signature

A digital signature (also referred to as a public key digital signature) is a digital string that can be generated only by a sender of information and cannot be forged by others. This digital string is also a valid proof of the authenticity of the information sent by the sender of the information. It is similar to a common physical signature written on paper, but is implemented by using a public key encryption technology to identify digital information. A set of digital signatures generally defines two complementary operations, one is used for signature, and another is used for verification. A digital signature is an application of an asymmetric key cryptography technology and a digital digest technology.

In a digital signature, a private key is generally used for encryption (equivalent to generating a signature), and a public key is used for decryption (equivalent to verifying a signature). A signature method may be directly signing a message by using a private key. After receiving the signed message, a verifier may decrypt the message by using the public key. If a decrypted message is the same as an original message, the signature is verified successfully. At present, during signature, a hash value of a message is generally signed. Because a length of the hash value is generally far less than that of a message original text, signature efficiency is greatly improved.

### (2) Digital certificate

A digital certificate is actually authentication of a public key of a user and is issued by an electronic certificate authority (CA). Content of the digital certificate may include: a signature of an electronic visa authority, identity information of a certificate owner, a public key, a private key, a validity period, and the like. Currently, a certificate format and a verification method comply with the X.509 international standard.

Generally, digital certificates are classified into two types on devices. A first type of digital certificate is a device certificate, which is uniquely bound to a device. The validity period of this type of certificate is long or indefinite. A second type of digital certificate is a service certificate, which is used when a specific service communicates with other devices. Different service scenarios require different certificates. For example, a common HTTPS server certificate is a common service certificate. A service certificate is bound to a specific service (for example, a server). When the service is migrated, the certificate needs to be changed accordingly. Generally, the service certificate has a validity period. After the service certificate expires, the service certificate cannot be used any more. The related service can be used only after the service certificate is updated.

Next, the system for service certificate management in this solution is described.

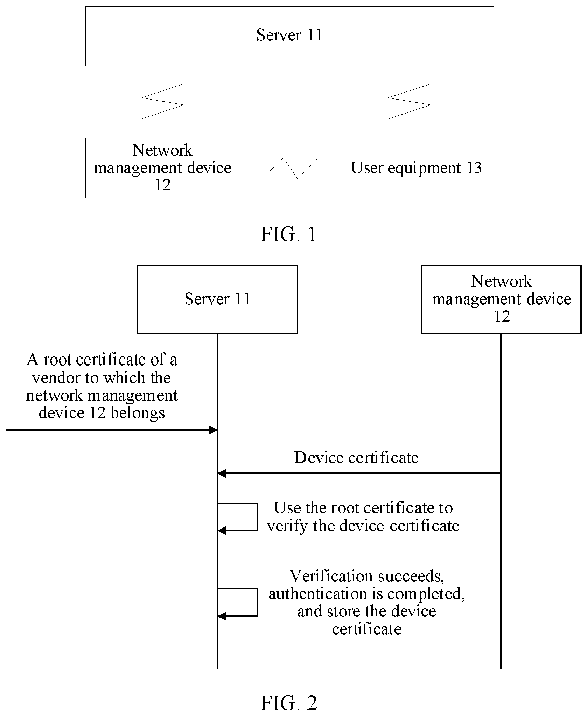

FIG 1 is a schematic diagram of a system architecture of a system for service certificate management according to an embodiment of this application. As shown in FIG. 1, the system includes: a server 11, a network management device 12, and a user equipment 13. The network management device 12 may be preset with a root certificate of a vendor to which the network management device 12 belongs and a device certificate of the network management device 12. The user equipment 13 may be preset with a root certificate of a vendor to which the user equipment 13 belongs and a device certificate of the user equipment 13. The server 11 may pre-authenticate the device certificate of the network management device 12, so that a secure network may be formed between the network management device 12 and the server 11. In this solution, the device certificate of the network management device 12 is issued by using a key of the root certificate of the vendor to which the network management device 12 belongs, and the device certificate of the user equipment 13 is issued by using a key of the root certificate of the vendor to which the user equipment 13 belongs. It may be understood that the server 11 is equivalent to an upper-layer device of the network management device 12, and the user equipment 13 is equivalent to a lower-layer device of the network management device 12.

The server 11 may pre-obtain the root certificate of the vendor to which the network management device 12 belongs. Then, the server 11 verifies, by using the root certificate, the device certificate of the network management device 12 sent by the network management device 12. If the verification succeeds, the server 11 completes the authentication on the network management device 12. In this case, the server 11 may store the device certificate of the network management device 12, so as to use the device certificate to verify the lower-layer device of the network management device 12. For example, as shown in FIG. 2, a process in which the server 11 authenticates the network management device 12 may be as follows: The server 11 pre-obtains the root certificate of the vendor to which the network management device 12 belongs from a network; when the network management device 12 accesses the network, the network management device 12 sends the device certificate of the network management device 12 to the server 11; and then the server 11 verifies the device certificate of the network management device 12 by using the root certificate of the vendor to which the network management device 12 belongs; and finally, if the verification succeeds, the server 11 completes authentication and stores the device certificate. It may be understood that when the server 11 verifies the device certificate of the network management device 12 by using the root certificate of the vendor to which the network management device 12 belongs, because the device certificate of the network management device 12 is issued by using the key of the root certificate of the vendor to which the network management device 12 belongs, when the device certificate of the network management device 12 can be decrypted by using the root certificate of the vendor to which the network management device 12 belongs, it indicates that the network management device 12 is a trusted device. Therefore, in this case, it may be determined that the verification succeeds.

After the device certificate of the network management device 12 is authenticated by the server 11, it indicates that the network management device 12 is a trusted device. In this case, the network management device 12 may issue a service certificate to the lower-layer device of the network management device 12 by using the device certificate of the network management device 12, where the service certificate is related to a service that can be provided by the server 11. In an example, after the network management device 12 issues the service certificate to the lower-layer device of the network management device 12 by using the device certificate of the network management device 12, the service certificate may correspond to a certificate chain, and the certificate chain may include: the root certificate of the vendor to which the network management device 12 belongs, the device certificate of the network management device 12, and the service certificate. The root certificate of the vendor to which the network management device 12 belongs may be used to verify the device certificate of the network management device 12, and the device certificate of the network management device 12 may be used to verify the service certificate. In an example, the network management device 12 may be an optical network terminal (ONT).

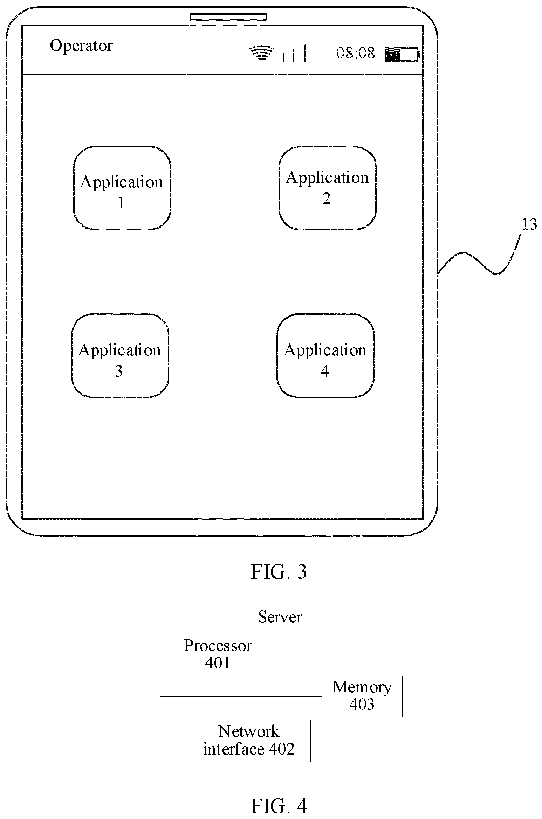

After the user equipment 13 establishes a connection to the network management device 12, the user equipment 13 may request the network management device 12 to allocate a service certificate corresponding to a service. In this solution, when requesting to allocate the service certificate corresponding to the service, the user equipment 13 may send a service identifier of the corresponding service to the network management device 12, so that the network management device 12 can determine, based on the service identifier, the service certificate required by the user equipment 13. In an example, the user equipment 13 may be an access point (AP), or may be a terminal (such as a mobile phone or a computer). For example, when the user equipment 13 is a terminal, as shown in FIG 3, various types of applications, such as a social application, a payment application, a game application, and a video application, may be installed on the user equipment 13. A user may start an application 1 in a manner such as tap, touch, or voice control. Then, if the application 1 needs to be configured to apply for a service certificate, the user equipment 13 may send a request to the network management device 12 to allocate a service certificate corresponding to the application 1. When the application 1 is a video type application, the service certificate that the user equipment 13 requests to allocate is a video type service certificate.

It can be understood that, in this solution, a device certificate authenticated by a server is preset in a network management device, so that the network management device may issue a service certificate to a lower-layer device of the network management device by using the device certificate, thereby forming a secure and effective certificate chain between the server, the network management device, and the lower-layer device of the network management device, avoiding presetting a service certificate in the lower-layer device of the network management device, and ensuring service security of the lower-layer device of the network management device.

It may be understood that, in this solution, the server 11 and the network management device 12, the server 11 and the user equipment 13, and the network management device 12 and the user equipment 13 may be connected by using a network such as a wired network or a wireless network. For example, the network may be a local area network (LAN), or may be a wide area network (WAN) (for example, the Internet). The network may be implemented by using any known network communication protocol. The network communication protocol may be various wired or wireless communication protocols, such as Ethernet, universal serial bus (USB), firewire, global system for mobile communication (GSM), general packet radio service (GPRS), code division multiple access (CDMA), wideband code division multiple access (WCDMA), time-division code division multiple access (TD-SCDMA), long term evolution (LTE), new radio (NR), Bluetooth wireless fidelity (Wi-Fi), and other communication protocols.

The foregoing describes the system for service certificate management involved in this solution. The following describes a structure of each component in the foregoing system for service certificate management.

First, a possible structure of the server 11 is described. FIG. 4 is a schematic diagram of a structure of a server according to an embodiment of this application. As shown in FIG. 4, the server 11 includes: a processor 401, a network interface 402, and a memory 403. The processor 401, the network interface 402, and the memory 403 may be connected by using a bus or in another manner. In this solution, the processor 401 (or referred to as a central processing unit (CPU)) is a computing core and a control core of the server 11. In an example, the processor 401 may authenticate the network management device 12. Optionally, the network interface 402 may include a standard wired interface and a wireless interface (such as a WI-FI or a mobile communication interface), and is controlled by the processor 401 to receive and send data, for example, receive, from the network, the root certificate of the vendor to which the network management device 12 belongs, receive an authentication request sent by the network management device 12, and receive a service request sent by the user equipment 13. The memory 403 is a memory device of the server, and is configured to store a program and data, for example, store the root certificate of the vendor to which the network management device 12 belongs, the device certificate of the network management device 12, and the service certificate issued by the network management device 12. It may be understood that the memory 403 may be a high-speed RAM memory, or may be a non-volatile memory, for example, at least one magnetic disk memory. Optionally, the memory 403 may further be at least one storage apparatus that is away from the foregoing processor 401. The memory 403 provides storage space. The storage space stores an operating system and executable program code of the server, and may include but is not limited to: a Windows system (an operating system), a Linux system (an operating system), a HarmonyOS (an operating system), and the like. This is not limited herein.

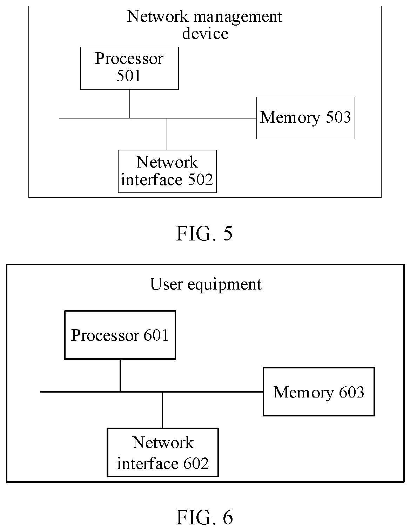

The following describes a possible structure of the network management device 12. FIG. 5 is a schematic diagram of a structure of a network management device according to an embodiment of this application. As shown in FIG 5, the network management device 12 includes: a processor 501, a network interface 502, and a memory 503. The processor 501, the network interface 502, and the memory 503 may be connected by using a bus or in another manner. In this solution, the processor 501 (or referred to as a central processing unit (CPU)) is a computing core and a control core of the network management device 12. In an example, the processor 501 may sign a service identifier of a corresponding service by using the key of the device certificate of the network management device 12, so as to generate a service certificate of the corresponding service. Optionally, the network interface 502 may include a standard wired interface and a wireless interface (for example, a WI-FI or a mobile communication interface), and is controlled by the processor 501 to receive and send data. For example, the network interface 502 receives a message that is sent by the user equipment 13 and that is for requesting to allocate a service certificate, sends the generated service certificate to the user equipment 13, and sends the generated service certificate to the server 11. The memory 503 is a memory device of the network management device 12, and is configured to store a program and data, for example, store the root certificate of the vendor to which the network management device 12 belongs, the device certificate of the network management device 12, the service certificate issued by the network management device 12, and a service certificate issuing policy. It may be understood that the memory 503 may be a high-speed RAM memory, or may be a non-volatile memory, for example, at least one magnetic disk memory. Optionally, the memory 503 may further be at least one storage apparatus that is away from the foregoing processor 501. The memory 503 provides storage space. The storage space stores an operating system and executable program code of the server, and may include but is not limited to: a Windows system (an operating system), a Linux system (an operating system), and the like. This is not limited herein.

The following describes a possible structure of the user equipment 13. FIG. 6 is a schematic diagram of a structure of a user equipment according to an embodiment of this application. As shown in FIG 6, the user equipment 13 includes a processor 601, a network interface 602, and a memory 603. The processor 601, the network interface 602, and the memory 603 may be connected by using a bus or in another manner. In this solution, the processor 601 (or referred to as a central processing unit (CPU)) is a computing core and a control core of the user equipment 13. In an example, when the user equipment 13 establishes a connection to the network management device 12, the processor 601 may generate a message for requesting to allocate a service certificate, and the message may carry a service identifier of a corresponding service. Optionally, the network interface 602 may include a standard wired interface or a wireless interface (such as a WI-FI or a mobile communication interface), and is controlled by the processor 601 and is configured to receive and send data, for example, send, to the network management device 12, a message used to request to allocate a service certificate, and receive a service certificate sent by the network management device 12. The memory 603 is a memory device of the user equipment 13, and is configured to store a program and data, for example, store the service certificate issued by the network management device 12. It may be understood that, the memory 603 may be a high-speed RAM memory, or may be a non-volatile memory, for example, at least one magnetic disk memory. Optionally, the memory 603 may further be at least one storage apparatus located far away from the foregoing processor 601. The memory 603 provides storage space. The storage space stores an operating system and executable program code of the server, and may include but is not limited to: a Windows system (an operating system), a Linux system (an operating system), and the like. This is not limited herein.

The foregoing describes the system for service certificate management involved in this solution and the structure of each component in the system for service certificate management. The following describes the method for service certificate management in this solution based on the foregoing described system for service certificate management and the structure of each component in the system for service certificate management.

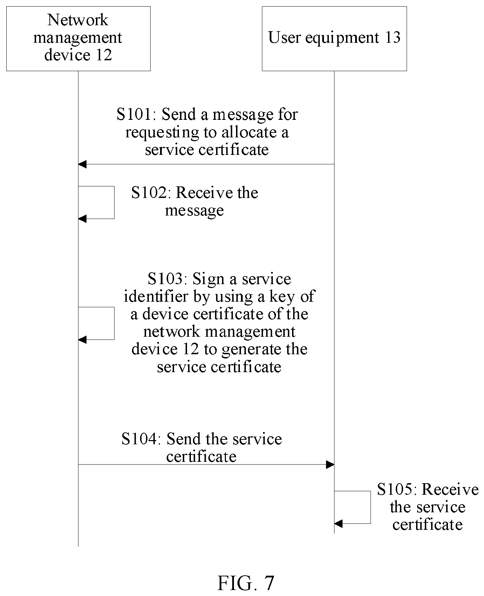

FIG 7 is a schematic communication diagram of a method for service certificate management according to an embodiment of this application. As shown in FIG. 7, the method for service certificate management provided in this solution may include the following steps.

Step S101: A user equipment 13 sends a first message to a network management device 12, where the first message includes a service identifier of a first service and is for requesting to allocate a service certificate.

Generally, when the user equipment 13 establishes a connection to the network management device 12 by using a wired network or a wireless network, the user equipment 13 may request the network management device 12 to allocate a service certificate of a service that the user equipment 13 needs to perform. In this solution, the user equipment 13 sends a message to the network management device 12, where the message may include the service identifier of the first service, and the message is for requesting to allocate a service certificate. For example, the first service may be a video service, a payment service, an Internet access service, or the like.

Step S102: The network management device 12 receives the first message sent by the user equipment 13.

Generally, after the user equipment 13 sends the first message, the network management device 12 may receive the first message.

Step S103: The network management device 12 signs, in response to the first message, the service identifier by using a key of a first device certificate to generate a first service certificate, where the first service certificate is verified by the server when the first user equipment 13 accesses a network.

Generally, after receiving the first message, the network management device 12 may respond to the message, and then sign the service identifier in the message by using a key (such as a private key) of the device certificate of the network management device 12, to generate the service certificate of the first service. In this solution, the service certificate of the first service may be used to be verified by the server 11 shown in FIG 1 when the user equipment 13 accesses the network. It should be noted that, in this solution, the device certificate of the network management device 12 needs to be authenticated by the server in advance, so that a trusted network is formed between the network management device 12 and the server 11. In addition, the service certificate issued by the network management device 12 can correspond to a certificate chain, thereby ensuring security of performing a service by the lower-layer device of the network management device. In an example, the key (for example, a private key) of the device certificate of the network management device 12 may be stored in a chip of the network management device 12.

Step S104: The network management device 12 sends the first service certificate to the user equipment 13.

Generally, after generating the service certificate of the first service, the network management device 12 may send the service certificate to the user equipment 13.

Step S105: The user equipment 13 receives the first service certificate.

Generally, after the network management device 12 sends the service certificate, the user equipment 13 may receive the service certificate.

It may be understood that, for some or all of the foregoing steps, refer to the foregoing description of the system for service certificate management. Details are not described herein again.

Therefore, in this solution, a device certificate authenticated by a server is preset in a network management device, so that the network management device may issue a service certificate to a lower-layer device of the network management device by using the device certificate, thereby forming a secure and effective certificate chain between the server, the network management device, and the lower-layer device of the network management device, avoiding presetting a service certificate in the lower-layer device of the network management device, and ensuring service security of the lower-layer device of the network management device.

In an example, after the network management device 12 issues the service certificate to the user equipment 13, the network management device 12 may further send certificate information of the service certificate to another device in the lower-layer device of the network management device 12, so that when the user equipment 13 communicates with the another device in the lower-layer device of the network management device 12, the lower-layer device of the network management device 12 may verify the identity of the user equipment 13 based on the received certificate information of the service certificate. Therefore, security of communication between lower-layer devices of the network management device 12 is further improved. The certificate information of the service certificate may include a sequence number, a validity period, an identity of the user equipment 13, and the like. For example, the identity of the user equipment 13 may include a device sequence number, a physical address, a device name, and the like of the device.

In an example, to improve security of issuing a certificate, before signing the service identifier by using the key of the first device certificate, the network management device 12 may verify a vendor to which the user equipment 13 belongs. For example, in step S101 shown in FIG. 7, the user equipment 13 may carry a vendor identifier of the user equipment 13 to the first message. Then, the network management device 12 may verify, based on the vendor identifier, the vendor to which the user equipment 13 belongs. When the vendor to which the user equipment 13 belongs is a trusted vendor, the service identifier may be signed by using the key of the first device certificate; otherwise, that the service identifier is signed by using the key of the first device certificate is limited. For example, in the configuration of the network management device 12, a vendor A may be considered as a trusted vendor, and a vendor B is an untrusted vendor by default. In this case, when the vendor to which the user equipment 13 belongs is the vendor A, the network management device 12 may issue a service certificate to the user equipment 13; when the vendor to which the user equipment 13 belongs is the vendor B, the network management device 12 cannot issue a service certificate to the user equipment 13.

In addition, in step S101 shown in FIG 7, the user equipment 13 may further carry the device certificate of the user equipment 13 to the first message. In this way, before signing the service identifier by using the key of the first device certificate, the network management device 12 may verify, based on the device certificate of the user equipment 13, whether the user equipment 13 belongs to a preset vendor, and issue the service certificate to the user equipment 13 when the user equipment 13 belongs to the preset vendor, thereby further improving security of issuing the certificate. For example, the network management device 12 may verify the device certificate of the user equipment 13 by using a root certificate of the vendor to which the network management device 12 belongs. When the verification succeeds, it may indicate that the network management device 12 and the user equipment 13 belong to a same vendor. In this case, the network management device 12 may trust the user equipment 13, and may further issue a service certificate to the user equipment 13.

In an example, in step S101 shown in FIG 7, the user equipment 13 may further carry device information of the user equipment 13 to the first message. In this way, before signing the service identifier by using the key of the first device certificate, the network management device 12 may verify an identity of the user equipment 13 based on the device information of the user equipment 13.

In an example, when issuing the service certificate to the user equipment 13, the network management device 12 may generate the service certificate based on a pre-configured certificate generation policy. The certificate generation policy may be preset in the network management device 12, or may be preset in the server 11. When the certificate generation policy is preset in the server 11, after receiving the message for requesting the user equipment 13 to allocate the service certificate, the network management device 12 may send, to the server 11, a message for requesting to obtain the certificate generation policy, so as to obtain the certificate generation policy from the server 11. For example, the certificate generation policy may include whether the network management device 12 has a certificate issuance permission, a rule for issuing a service certificate, and the like. It may be understood that, when the certificate generation policy includes whether the network management device 12 has the certificate issuance permission, before step S103 shown in FIG 7, the network management device 12 needs to first determine that the network management device 12 has the certificate issuance permission.

In addition, the rule for issuing the service certificate included in the certificate generation policy may include: When the user equipment and the network management device belong to a same vendor, the service certificate is directly issued; when the user equipment and the network management device belong to different vendors, it is required to verify whether the vendor to which the user equipment belongs is a trusted vendor; or a temporary service certificate is directly issued without verifying the vendor to which the user equipment belongs. It may be understood that the rule for issuing the service certificate may also include a validity period specification of the issued service certificate. For example, when the user equipment and the network management device belong to a same vendor, the validity period of the issued service certificate is permanently valid; when the user equipment and the network management device belong to different vendors, the validity period of the issued service certificate is short-term valid; when the issued certificate is a temporary service certificate, the validity period of the certificate is one day.

In an example, when signing the service identifier by using the key of the first device certificate to generate the first service certificate, the network management device 12 may determine a validity period of the first service certificate, for example, determine the validity period based on the foregoing rule for issuing the service certificate.

In an example, after the network management device 12 issues the service certificate to the user equipment 13, the network management device 12 may record device information of the user equipment 13, so that the system or the user further determines the information about the user equipment 13, thereby preventing the user equipment 13 from forging a device of another trusted vendor, and further improving security of issuing the service certificate. The device information of the user equipment 13 may include one or more of the following: the device identifier of the user equipment 13, the vendor identifier of the vendor to which the user equipment 13 belongs, a physical address of the user equipment 13, a product sequence number of the user equipment 13, or the like.

In an example, after issuing the service certificate to the user equipment 13, the network management device 12 may send the service certificate issued by the network management device 12 to the server 11, so that the server 11 learns corresponding service certificate information, and then manages the corresponding service certificate.

In an example, after the service certificate issued by the network management device 12 expires, the network management device 12 may revoke the service certificate; and then, the network management device 12 may restart a service corresponding to the service certificate, or restart the user equipment 13, so that the user equipment 13 cannot continue to perform the service corresponding to the service certificate. It may be understood that, the network management device 12 may send a restart control instruction to the user equipment 13 to control restart of the user equipment 13. When the network management device 12 cannot control restart of the user equipment 13, the network management device 12 may restart a service corresponding to a service certificate revoked by the network management device 12. In addition, the restart of the service and the restart of the user equipment may be performed at the same time, or may not be performed at the same time, which is not limited herein.

The foregoing describes the method for service certificate management in this solution. For ease of understanding, the following uses a home network application scenario as an example for description. For example, in a home network application scenario, the server 11 shown in FIG. 1 may be a server of an operator, the network management device 12 may be a home gateway, and the user equipment 13 may be a mobile phone.

In the home network application scenario, the home gateway is a device D1 of a vendor A, and the home gateway passes a network entry test of an operator X, and obtains a service certificate of a TR-069 service of the operator X. In this case, a new device D2 of a vendor B is connected to the home network, and needs to be connected to a TR-069 server of the operator X. However, because the vendor B does not obtain a network access test from the operator X, or does not obtain a service certificate for connecting to the TR-069 server, the device D2 cannot communicate with the TR-069 server of the operator X.

In this case, when the TR-069 server of the operator X configures a certificate issuing policy for the device D1 of the vendor A, the device of the vendor B is allowed to access the network of the vendor A. In this case, the device D1 of the vendor A may issue a service certificate to the device D2 of the vendor B by using a standard certificate request protocol. In addition, a more secure policy is that the vendor A may preset a device root certificate of the vendor B in the device D1, and then the D1 may use the root certificate of the vendor B to verify a device certificate of the device D2. If the verification succeeds, the device D1 issues a service certificate signed by a key of the device certificate of the device D1 to the device D2, where the service certificate may also be understood as a service certificate signed by the vendor A. That is, in this case, the device D2 of the vendor B may replace the device certificate signed by the vendor B with the service certificate signed by the vendor A, so that the trust chain is extended to a management network of the operator X.

Then, the device D2 is connected to the TR-069 server of the operator X by using the service certificate signed by the vendor A. Because the TR-069 server of the operator X has authenticated the vendor A, the TR-069 server of the operator X may verify all signature certificates of the vendor A. In this case, the device D2 of the vendor B connected to the device D1 of the vendor A may be successfully connected to the TR-069 server of the operator X, so as to perform a corresponding service.

Finally, if the operator X does not want the device D2 of the vendor B to access the TR-069 server of the operator X, the operator X may directly revoke the service certificate issued by the device D1 to the device D2, restart the service corresponding to the service certificate, and prohibit issuing the service certificate to the device D2 in the certificate issuing policy. Then, the device D2 is denied access to the TR-069 server of the operator X, and cannot apply for a new service certificate from the device D1 again.

Next, for further ease of understanding of this solution, the following further provides an example for description.

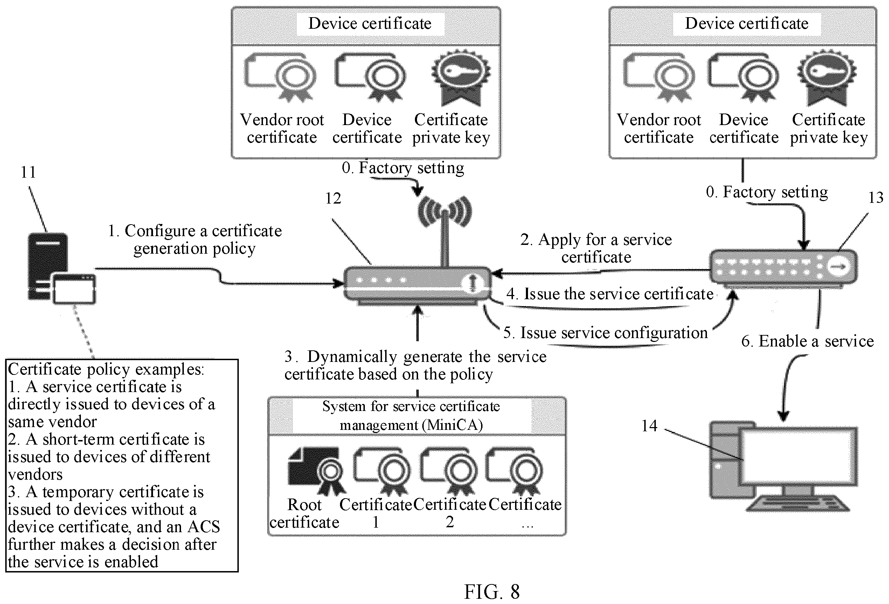

As shown in FIG 8, first, a root certificate, a device certificate, a certificate private key, and the like of the vendors to which the network management device 12 and the user equipment 13 belong may be respectively preset in the network management device 12 and the user equipment 13. Then, the server 11 may configure a certificate generation policy for the network management device 12, for example, "a service certificate is directly issued to devices of a same vendor", "a short-term certificate is issued to devices of different vendors", and "a temporary certificate is issued to devices without a device certificate, and a server further makes a decision after a service is enabled". The server 11 may be an auto-configuration server (ACS). Then, the user equipment 13 establishes a connection to the network management device 12, and the user equipment 13 applies for a service certificate from the network management device 12. Then, the network management device 12 generates a service certificate based on the certificate generation policy, and records the service certificate in the system for service certificate management of the network management device 12. Then, the network management device 12 sends the service certificate generated by the network management device 12 to the user equipment 13. After receiving the service certificate, the user equipment 13 may enable a service corresponding to the service certificate for the user equipment 13 or a device (for example, a terminal 14 shown in the figure) that is not connected to the user equipment 13. In addition, to ensure that the user equipment 13 can successfully enable a service, the network management device 12 may also send some basic service configuration information to the user equipment 13, where the basic service configuration information may include a network bandwidth, a password required for network connection, and the like. In an example, content indicated by numbers 0 to 6 in FIG 8 may be understood as an overall process of service certificate management.

The foregoing describes the method for service certificate management in this solution. The following describes an apparatus for service certificate management provided in this solution based on the method provided in the foregoing embodiment. The apparatus for service certificate management may be deployed in the network management device 12 described above. A first device certificate authenticated by the server is preset in the network management device 12.

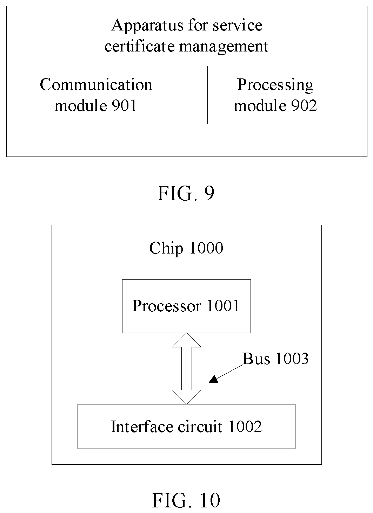

FIG 9 is a schematic diagram of a structure of an apparatus for service certificate management according to an embodiment of this application. As shown in FIG. 9, the apparatus for service certificate management includes: a communication module 91 and a processing module 92. The communication module 91 may be configured to receive a first message sent by a first user equipment, where the first message includes a service identifier of a first service and is for requesting to allocate a service certificate. The processing module 92 may be configured to sign, in response to the first message, the service identifier by using a key of the first device certificate to generate a first service certificate, where the first service certificate is verified by the server when the first user equipment accesses a network. In addition, the communication module 91 may be further configured to send the first service certificate to the first user equipment. For example, the communication module 91 may be the network interface 502 shown in FIG 5, and the processing module 92 may be the processor 501 shown in FIG 5. It may be understood that, in this solution, the first device certificate is authenticated by the server.

In an implementation, the communication module 91 may be further configured to send first certificate information of the first service certificate to a second user equipment, where the first certificate information includes at least one of a sequence number, a validity period, and an identifier of the first user equipment, the first certificate information is for verifying an identity of the first user equipment when the second user equipment communicates with the first user equipment, and the second user equipment is a lower-layer device of the network management device.

In an implementation, the first message includes a vendor identifier of a vendor to which the first user equipment belongs. In this case, the processing module 92 is further configured to: before signing the service identifier by using the key of the first device certificate, verify, based on the vendor identifier, the vendor to which the first user equipment belongs, and determine that the vendor to which the first user equipment belongs is a trusted vendor.

In an implementation, the first message includes a second device certificate of the first user equipment. In this case, the processing module 92 is further configured to: before signing the service identifier by using the key of the first device certificate, verify, based on the second device certificate, whether the first user equipment belongs to a preset vendor, and determine that the first user equipment belongs to the preset vendor.

In an implementation, the processing module 92 may be further configured to: before signing the service identifier by using the key of the first device certificate, determine that the network management device has a certificate issuance permission.

In an implementation, the processing module 92 may be further configured to determine, when the first service certificate is generated, the validity period of the first service certificate.

In an implementation, the processing module 92 may be further configured to record first device information of the first user equipment, where the first device information includes one or more of the following: a device identifier of the first user equipment, the vendor identifier of the vendor to which the first user equipment belongs, a physical address of the first user equipment, or a product sequence number of the first user equipment.

In an implementation, the processing module 92 may be further configured to determine that the first service certificate is revoked, and restart at least one of the first user equipment and the first service.

In an implementation, the communication module 91 may be further configured to send the first service certificate to the server.

It should be understood that the foregoing apparatus is configured to perform the method in the foregoing embodiment. An implementation principle and a technical effect of a corresponding program module in the apparatus are similar to those described in the foregoing method. For a working process of the apparatus, refer to a corresponding process in the foregoing method. Details are not described herein again.

Based on the method provided in the foregoing embodiment, this solution further provides another apparatus for service certificate management. The apparatus for service certificate management may be deployed in the user equipment 13 described above. The apparatus for service certificate management may include a communication module. The communication module may be configured to send a first message to a network management device, where the first message includes a service identifier of a first service and is for requesting to allocate a service certificate, and a first device certificate authenticated by a server is preset in the network management device. The communication module may further be configured to receive a first service certificate sent by the network management device, where the first service certificate is generated by the network management device by signing the service identifier by using a key of the first device certificate, and the first service certificate is verified by the server when the first user equipment accesses a network. For example, the communication module may be the network interface 602 shown in FIG. 6.

It should be understood that the foregoing apparatus is configured to perform the method in the foregoing embodiment. An implementation principle and a technical effect of a corresponding program module in the apparatus are similar to those described in the foregoing method. For a working process of the apparatus, refer to a corresponding process in the foregoing method. Details are not described herein again.

Based on the method provided in the foregoing embodiment, this solution further provides a chip.

FIG 10 is a schematic diagram of a structure of a chip according to an embodiment of this application. A chip 1000 includes one or more processors 1001 and an interface circuit 1002. Optionally, the chip 1000 may further include a bus 1003.

The processor 1001 may be an integrated circuit chip and has a signal processing capability. In an implementation process, each step in the foregoing method may be completed by using an integrated logic circuit of hardware in the processor 1001 or instructions in a form of software. The processor 1001 may be a general-purpose processor, a digital communicator (DSP), an application-specific integrated circuit (ASIC), a field programmable gate array (FPGA) or another programmable logic device, a discrete gate or a transistor logic device, or a discrete hardware component. The processor 1401 may implement or perform the methods and steps that are disclosed in embodiments of this application. The general-purpose processor may be a microprocessor, or the processor may be any conventional processor or the like.

The interface circuit 1002 may be configured to send or receive data, instructions, or information. The processor 1001 may process data, the instructions, or other information received by the interface circuit 1002, and send, through the interface circuit 1002, information obtained after processing.

Optionally, the chip further includes a memory. The memory may include a read-only memory and a random access memory, and provide operation instructions and data for the processor. A part of the memory may further include a non-volatile random access memory (NVRAM).

Optionally, the memory stores an executable software module or a data structure, and the processor may perform a corresponding operation by invoking operation instructions (the operation instructions may be stored in an operating system) stored in the memory.

Optionally, the chip may be used in the communication apparatus (including the primary node and the secondary node) in embodiments of this application. Optionally, the interface circuit 1002 may be configured to output an execution result of the processor 1001.

It should be noted that functions respectively corresponding to the processor 1001 and the interface circuit 1002 may be implemented by using a hardware design, may be implemented by using a software design, or may be implemented in a combination of software and hardware. This is not limited herein.

It should be understood that steps in the foregoing method embodiments may be implemented by using a logic circuit in a form of hardware or an instruction in a form of software in the processor. The processor may be a CPU, a digital signal processor (DSP), an application specific integrated circuit (ASIC), a field programmable gate array (FPGA), or another programmable logic device, for example, a discrete gate, a transistor logic device, or a discrete hardware component.

It may be understood that in the descriptions of embodiments of this application, words such as "exemplary" or "for example" are used to represent giving an example, an illustration, or a description. Any embodiment or design scheme described as "exemplary" or "for example" in embodiments of this application should not be explained as being more preferred or having more advantages than another embodiment or design scheme. Exactly, use of the word "exemplary" or "for example" is intended to present a related concept in a specific manner.

In the descriptions of embodiments of this application, the term "and/or" describes only an association relationship for describing associated objects and represents that three relationships may exist. For example, A and/or B may represent the following three cases: Only A exists, only B exists, and both A and B exist. In addition, unless otherwise specified, the term "a plurality of" means two or more than two. For example, a plurality of systems refer to two or more systems, a plurality of terminals refer to two or more terminals, and a plurality of video streams refer to two or more video streams.

Moreover, the terms "first" and "second" are merely intended for a purpose of description, and shall not be understood as an indication or implication of relative importance or implicit indication of an indicated technical feature. Therefore, a feature limited by "first" or "second" may explicitly or implicitly include one or more features. The terms "include", "have", and their variants all mean "include but are not limited to", unless otherwise specifically emphasized in another manner.

It may be understood that, the processor in embodiments of this application may be a central processing unit (CPU), the processor may further be another general-purpose processor, a digital signal processor (DSP), an application-specific integrated circuit (ASIC), a field programmable gate array (FPGA) or another programmable logic device, a transistor logic device, a hardware component, or any combination thereof. The general purpose processor may be a microprocessor or any regular processor or the like.

The method steps in embodiments of this application may be implemented in a hardware manner, or may be implemented in a manner of executing software instructions by the processor. The software instructions may include corresponding software modules. The software modules may be stored in a random access memory (RAM), a flash memory, a read-only memory (ROM), a programmable read-only memory (PROM), an erasable programmable read-only memory ( EPROM), an electrically erasable programmable read-only memory (EEPROM), a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instruction may be stored in a computer-readable storage medium, or may be transmitted by using the computer-readable storage medium. The computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state drive (SSD)), or the like.

It may be understood that various numbers in embodiments of this application are merely used for differentiation for ease of description, and are not used to limit the scope of embodiments of this application.

## Claims

1. A method for service certificate management performed by a network management device, wherein a first device certificate authenticated by a server is preset in the network management device, and the method comprises:
• receiving (S 102) a first message from a first user equipment, wherein the first message comprises a service identifier of a first service and is for requesting to allocate a service certificate, wherein the first message furthermore comprises a vendor identifier of a vendor to which the first user equipment belongs;
• verifying, based on the received vendor identifier, the vendor to which the first user equipment belongs, and determining that the vendor to which the first user equipment belongs is a trusted vendor;
• in response to the determination that the vendor to which the first user equipment belongs is a trusted vendor, signing (S 103) the service identifier by using a key of the first device certificate to generate a first service certificate, wherein the first service certificate is verified by the server when the first user equipment accesses a network; and
• sending (S 104) the first service certificate to the first user equipment.

2. The method according to claim 1, wherein the method further comprises:
o sending first certificate information of the first service certificate to a second user equipment, wherein the first certificate information comprises at least one of a sequence number, a validity period, and an identifier of the first user equipment, the first certificate information is for verifying an identity of the first user equipment when the second user equipment communicates with the first user equipment, and the second user equipment is a lower-layer device of the network management device.

3. The method according to any one of claims 1 to 2, wherein the first message comprises a second device certificate of the first user equipment; and
before the signing the service identifier by using the key of the first device certificate, the method comprises:
o verifying, based on the second device certificate, whether the first user equipment belongs to a preset vendor, and determining that the first user equipment belongs to the preset vendor.

4. The method according to any one of claims 1 to 3, wherein before the signing the service identifier by using the key of the first device certificate, the method comprises:
o determining that the network management device has a certificate issuance permission.

5. The method according to any one of claims 1 to 4, wherein the method further comprises:
o determining, when the first service certificate is generated, the validity period of the first service certificate.

6. The method according to any one of claims 1 to 5, wherein the method further comprises:
o recording first device information of the first user equipment, wherein the first device information comprises one or more of the following: a device identifier of the first user equipment, the vendor identifier of the vendor to which the first user equipment belongs, a physical address of the first user equipment, or a product sequence number of the first user equipment.

7. The method according to any one of claims 1 to 6, wherein the method further comprises:
∘ determining that the first service certificate is revoked; and
∘ restarting at least one of the first user equipment and the first service.

8. The method according to any one of claims 1 to 7, wherein the method further comprises:
o sending the first service certificate to the server.

9. A method for service certificate management performed by a first user equipment, wherein the method comprises:
• sending (S 101) a first message to a network management device as defined in claim 1, wherein the first message comprises a service identifier of a first service and is for requesting to allocate a service certificate, wherein the first message furthermore comprises a vendor identifier of a vendor to which the first user equipment belongs, wherein a first device certificate authenticated by a server is preset in the network management device; and
• receiving (S 105) a first service certificate from the network management device, wherein the first service certificate is generated by the network management device by signing the service identifier by using a key of the first device certificate, wherein the first service certificate is verified by the server when the first user equipment accesses a network.

10. A network management device configured to perform the method according to any of claims 1 to 8.

11. A first user equipment configured to perform the method according to claim 9.

## Patentansprüche

1. Verfahren für eine Dienstzertifikatsverwaltung, das durch eine Netzwerkverwaltungsvorrichtung durchgeführt wird, wobei ein erstes Vorrichtungszertifikat, das durch einen Server authentifiziert wird, in der Netzwerkverwaltungsvorrichtung voreingestellt ist, und das Verfahren umfasst:
• Empfangen (S 102) einer ersten Nachricht von einer ersten Benutzereinrichtung, wobei die erste Nachricht eine Dienstkennung eines ersten Dienstes umfasst und zum Anfordern einer Zuweisung eines Dienstzertifikats dient, wobei die erste Nachricht ferner eine Anbieterkennung eines Anbieters, zu dem die erste Benutzereinrichtung gehört, umfasst;
• Überprüfen, basierend auf der empfangenen Anbieterkennung, des Anbieters, zu dem die erste Benutzereinrichtung gehört, und Bestimmen, dass der Anbieter, zu dem die erste Benutzereinrichtung gehört, ein vertrauenswürdiger Anbieter ist;
• als Reaktion auf die Bestimmung, dass der Anbieter, zu dem die erste Benutzereinrichtung gehört, ein vertrauenswürdiger Anbieter ist, Signieren (S 103) der Dienstkennung durch Verwenden eines Schlüssels des ersten Vorrichtungszertifikats, um ein erstes Dienstzertifikat zu erzeugen, wobei das erste Dienstzertifikat durch den Server überprüft wird, wenn die erste Benutzereinrichtung auf ein Netzwerk zugreift; und
• Senden (S104) des ersten Dienstzertifikats an die erste Benutzereinrichtung.

2. Verfahren nach Anspruch 1, wobei das Verfahren ferner umfasst:
∘ Senden von ersten Zertifikatsinformationen des ersten Dienstzertifikats an eine zweite Benutzereinrichtung, wobei die ersten Zertifikatsinformationen mindestens eines von einer Sequenznummer, einer Gültigkeitsdauer und einer Kennung der ersten Benutzereinrichtung umfassen, die ersten Zertifikatsinformationen zum Überprüfen einer Identität der ersten Benutzereinrichtung dienen, wenn die zweite Benutzereinrichtung mit der ersten Benutzereinrichtung kommuniziert, und die zweite Benutzereinrichtung eine Vorrichtung einer niedrigeren Schicht der Netzwerkverwaltungsvorrichtung ist.

3. Verfahren nach einem der Ansprüche 1 bis 2, wobei die erste Nachricht ein zweites Vorrichtungszertifikat der ersten Benutzereinrichtung umfasst; und vor dem Signieren der Dienstkennung durch Verwenden des Schlüssels des ersten Vorrichtungszertifikats das Verfahren umfasst:
∘ Überprüfen, basierend auf dem zweiten Vorrichtungszertifikat, ob die erste Benutzereinrichtung zu einem voreingestellten Anbieter gehört, und Bestimmen, dass die erste Benutzereinrichtung zu dem voreingestellten Anbieter gehört.

4. Verfahren nach einem der Ansprüche 1 bis 3, wobei vor dem Signieren der Dienstkennung durch Verwenden des Schlüssels des ersten Vorrichtungszertifikats das Verfahren umfasst:
∘ Bestimmen, dass die Netzwerkverwaltungsvorrichtung eine Berechtigung für eine Zertifikatsausstellung aufweist.

5. Verfahren nach einem der Ansprüche 1 bis 4, wobei das Verfahren ferner umfasst:
∘ Bestimmen, wenn das erste Dienstzertifikat erzeugt wird, der Gültigkeitsdauer des ersten Dienstzertifikats.

6. Verfahren nach einem der Ansprüche 1 bis 5, wobei das Verfahren ferner umfasst:
∘ Aufzeichnen von ersten Vorrichtungsinformationen der ersten Benutzereinrichtung, wobei die ersten Vorrichtungsinformationen eines oder mehrere der folgenden umfassen: eine Vorrichtungskennung der ersten Benutzereinrichtung, die Anbieterkennung des Anbieters, zu dem die erste Benutzereinrichtung gehört, eine physikalische Adresse der ersten Benutzereinrichtung oder eine Produktsequenznummer der ersten Benutzereinrichtung.

7. Verfahren nach einem der Ansprüche 1 bis 6, wobei das Verfahren ferner umfasst:
∘ Bestimmen, dass das erste Dienstzertifikat widerrufen wurde; und
∘ Neustarten von mindestens einem von der ersten Benutzereinrichtung und dem ersten Dienst.

8. Verfahren nach einem der Ansprüche 1 bis 7, wobei das Verfahren ferner umfasst:
∘ Senden des ersten Dienstzertifikats an den Server.

9. Verfahren für die Dienstzertifikatsverwaltung, das durch eine erste Benutzereinrichtung durchgeführt wird, wobei das Verfahren umfasst:
• Senden (S 101) einer ersten Nachricht an eine Netzwerkverwaltungsvorrichtung nach Anspruch 1, wobei
die erste Nachricht eine Dienstkennung eines ersten Dienstes umfasst und zum Anfordern der Zuweisung eines Dienstzertifikats dient, wobei die erste Nachricht ferner eine Anbieterkennung eines Anbieters, zu dem die erste Benutzereinrichtung gehört, umfasst, wobei ein erstes Vorrichtungszertifikat, das durch einen Server authentifiziert wird, in der Netzwerkverwaltungsvorrichtung voreingestellt ist; und
• Empfangen (S 105) eines ersten Dienstzertifikats von der Netzwerkverwaltungsvorrichtung, wobei das erste Dienstzertifikat durch die Netzwerkverwaltungsvorrichtung durch Signieren der Dienstkennung durch Verwenden eines Schlüssels des ersten Vorrichtungszertifikats erzeugt wird, wobei das erste Dienstzertifikat durch den Server überprüft wird, wenn die erste Benutzereinrichtung auf ein Netzwerk zugreift.

10. Netzwerkverwaltungsvorrichtung, die konfiguriert ist, um das Verfahren nach einem der Ansprüche 1 bis 8 durchzuführen.

11. Erste Benutzereinrichtung, die konfiguriert ist, um das Verfahren nach Anspruch 9 durchzuführen.

## Revendications

1. Procédé de gestion des certificats de service réalisé par un dispositif de gestion de réseau, dans lequel un premier certificat de dispositif authentifié par un serveur est prédéfini dans le dispositif de gestion de réseau, et le procédé comprend :
• la réception (S 102) d'un premier message provenant d'un premier équipement d'utilisateur, dans lequel le premier message comprend un identifiant de service d'un premier service et est destiné à une nouvelle demande d'attribution d'un certificat de service, dans lequel le premier message comprend en outre un identifiant de fournisseur d'un fournisseur auquel appartient le premier équipement d'utilisateur ;
• la vérification, sur la base de l'identifiant de fournisseur reçu, du fournisseur auquel appartient le premier équipement d'utilisateur, et la détermination du fait que le fournisseur auquel appartient le premier équipement d'utilisateur est un fournisseur de confiance ;
• en réponse à la détermination que le vendeur auquel appartient le premier équipement d'utilisateur est un vendeur de confiance, la signature (S103) de l'identifiant de service en utilisant une clé du premier certificat de dispositif pour générer un premier certificat de service, dans lequel le premier certificat de service est vérifié par le serveur lorsque le premier équipement d'utilisateur accède à un réseau ; et
• l'envoi (S 104) du premier certificat de service au premier équipement utilisateur.

2. Procédé selon la revendication 1, dans lequel le procédé comprend en outre :
o l'envoi des premières informations de certificat du premier certificat de service à un second équipement d'utilisateur, dans lequel les premières informations de certificat comprennent au moins l'un parmi un numéro de séquence, une période de validité et un identifiant du premier équipement d'utilisateur, les premières informations de certificat sont destinées à vérifier une identité du premier équipement d'utilisateur lorsque le second équipement d'utilisateur communique avec le premier équipement d'utilisateur, et le second équipement d'utilisateur est un dispositif de couche inférieure du dispositif de gestion de réseau.

3. Procédé selon l'une quelconque des revendications 1 à 2, dans lequel le premier message comprend un second certificat de dispositifl du premier équipement d'utilisateur ; et avant la signature de l'identifiant de service en utilisant la clé du premier certificat de dispositif, le procédé comprend :
o la vérification, sur la base du second certificat de dispositif, du fait que le premier équipement d'utilisateur appartient à un fournisseur prédéfini, et la détermination du fait que le premier équipement d'utilisateur appartient au fournisseur prédéfini.

4. Procédé selon l'une quelconque des revendications 1 à 3, dans lequel, avant de signer l'identifiant de service en utilisant la clé du premier certificat de dispositif, le procédé comprend :
o la détermination du fait que le dispositif de gestion de réseau possède une autorisation de délivrance de certificat.

5. Procédé selon l'une quelconque des revendications 1 à 4, dans lequel le procédé comprend en outre :
o la détermination, lorsque le premier certificat de service est généré, de la période de validité du premier certificat de service.

6. Procédé selon l'une quelconque des revendications 1 à 5, dans lequel le procédé comprend en outre :
o l'enregistrement des premières informations de dispositif relatives au premier équipement d'utilisateur, dans lequel les premières informations de dispositif comprennent un ou plusieurs des éléments suivants : un identifiant de dispositif du premier équipement d'utilisateur, l'identifiant de fournisseur du fournisseur auquel appartient le premier équipement d'utilisateur, une adresse physique du premier équipement d'utilisateur ou un numéro de séquence de produit du premier équipement d'utilisateur.

7. Procédé selon l'une quelconque des revendications 1 à 6, dans lequel le procédé comprend en outre :
∘ la détermination du fait que le premier certificat de service est révoqué ; et
∘ le redémarrage d'au moins l'un parmi le premier équipement d'utilisateur et le premier service.

8. Procédé selon l'une quelconque des revendications 1 à 7, dans lequel le procédé comprend en outre :
o l'envoi du premier certificat de service au serveur.

9. Procédé de gestion des certificats de service réalisé par un premier équipement d'utilisateur, dans lequel le procédé comprend :
• l'envoi (S 101) d'un premier message à un dispositif de gestion de réseau tel que défini dans la revendication 1, dans lequel
le premier message comprend un identifiant de service d'un premier service et sert à demander l'attribution d'un certificat de service, dans lequel le premier message comprend en outre un identifiant de fournisseur auquel appartient le premier équipement d'utilisateur, dans lequel un premier certificat de dispositif authentifié par un serveur est prédéfini dans le dispositif de gestion de réseau ; et
• la réception (S 105) d'un premier certificat de service du dispositif de gestion de réseau, dans lequel le premier certificat de service est généré par le dispositif de gestion de réseau en signant l'identifiant de service en utilisant une clé du premier certificat de dispositif, dans lequel le premier certificat de service est vérifié par le serveur lorsque le premier équipement d'utilisateur accède à un réseau.

10. Dispositif de gestion de réseau configuré pour réaliser le procédé selon l'une quelconque des revendications 1 à 8.

11. Premier équipement d'utilisateur configuré pour réaliser le procédé selon la revendication 9.
